# EUROPEAN PATENT APPLICATION

(11) **EP 3 068 106 A1**
(43) Date of publication of application: **14.09.2016**
(21) Application number: 14869926.7
(22) Date of filing: 24.06.2014
(51) Int. Cl.: H04L 29/08

(54) **GOVERNMENT ENTERPRISE NETWORK COMMUNICATION DEVICE AND COMMUNICATION METHOD, AND COMPUTER STORAGE MEDIUM**

(30) Priority: 11.12.2013 CN 201310673652
(71) Applicant: ZTE Corporation, Shenzhen, Guangdong 518057 (CN)
(72) Inventor: CHEN, Dan, Shenzhen Guangdong 518057 (CN); TU, Jiashun, Shenzhen Guangdong 518057 (CN); LIU, Shaoyong, Shenzhen Guangdong 518057 (CN)
(74) Representative: Brevalex
(86) International application number: PCT/CN2014/080646
(87) International publication number: WO 2015/085749

(57) **Abstract**

Disclosed in an embodiment of the present invention are a government enterprise network communication device and communication method, and computer storage medium. The device comprises a receiving unit and a processing unit. The method correspondingly comprises: a receiving unit receives a call request to make a call with a called terminal transmitted by a browser user terminal via a browser having a WebRTC function, and a processing unit establishes a connection between the browser user terminal and the called terminal according to the call request.

## Description

### TECHNICAL FIELD

The disclosure relates to the field of communication technology, and in particular to a device and method for communication via a government or enterprise intranet, and a non-transitory computer-readable storage medium.

### BACKGROUND

For conventional voice communication involving a government or an enterprise, Internet Protocol Private Branch exchange (IP PBX) is employed as a mainstream technology, mainly for user voice access, with equipment based on various kinds of landline phones. There is an increasing office need of an employee within a government or enterprise intranet to work with a mobile phone, a Personal Computer (PC), or a tablet. Such terminals are thus required to work together within the government or enterprise intranet. Therefore, there is a pressing need for implementing communication among various terminals based on a government or enterprise intranet.

### SUMMARY

In view of this, embodiments herein provide a device and method for communication via a government or enterprise intranet, and a non-transitory computer-readable storage medium, capable of supporting communication with a browser terminal via a government or enterprise intranet.

A technical solution according to an embodiment herein may be implemented as follows.

A device for communication via a government or enterprise intranet includes:
a receiving unit configured for: receiving a call request sent by a browser user terminal requesting to call a called terminal, the call request being sent through a browser supporting Web Real-Time Communication (WebRTC); and
a processing unit configured for: establishing a connection between the called terminal and the browser user terminal according to the call request.

The processing unit may include a first processing module and /or a second processing module.

The first processing module may be configured for: in response to receiving, by the receiving unit, a call request sent by a browser user terminal internal to the government or enterprise intranet, performing protocol conversion; searching registered users according to a number of the called terminal; and in response to finding the called terminal, establishing a connection between the called terminal and the browser user terminal internal to the government or enterprise intranet.

The second processing module may be configured for: in response to receiving, by the receiving unit, a call request sent by a browser user terminal external to the government or enterprise intranet, performing protocol conversion; searching the registered users according to the number of the called terminal; and in response to finding the called terminal, establishing a connection between the called terminal and the browser user terminal external to the government or enterprise intranet.

The called terminal may be a user terminal internal to the government or enterprise intranet.

The processing unit may include a third processing module.

The receiving unit may be further configured for: receiving a call request sent by a landline user terminal internal to the government or enterprise intranet requesting to call the called terminal.

The third processing module may be configured for: in response to receiving, by the receiving unit, the call request sent by the landline user terminal internal to the government or enterprise intranet, performing protocol conversion; searching registered users according to a number of the called terminal; and in response to finding the called terminal, establishing a connection between the called terminal and the landline user terminal internal to the government or enterprise intranet. The called terminal may be a user terminal internal to the government or enterprise intranet.

The processing unit may include a fourth processing module.

The receiving unit may be further configured for: receiving a call request sent by a landline user terminal internal to the government or enterprise intranet requesting to call the called terminal.

The fourth processing module may be configured for: in response to receiving, by the receiving unit, a call request sent by a browser user terminal or a landline user terminal internal to the government or enterprise intranet, performing protocol conversion; searching registered users according to a number of the called terminal; in response to finding no called terminal, sending the call request to a Voice over Internet Phone (VOIP) through an Ethernet and a router to establish, through the VOIP, a connection between the called terminal and the browser user terminal or the landline user terminal internal to the government or enterprise intranet. The called terminal may be a user terminal external to the government or enterprise intranet.

The receiving unit may be further configured for: in response to receiving a call request sent by a browser user terminal or a landline user terminal internal to the government or enterprise intranet, triggering the processing unit when the landline user terminal or the browser user terminal is permitted to call.

According to an embodiment herein, a method for communication via a government or enterprise intranet includes:
receiving a call request sent by a browser user terminal requesting to call a called terminal, the call request being sent through a browser supporting Web Real-Time Communication (WebRTC); and establishing a connection between the called terminal and the browser user terminal according to the call request.

The establishing a connection between the called terminal and the browser user terminal according to the call request may include:
in response to receiving a call request sent by a browser user terminal internal or external to the government or enterprise intranet, performing protocol conversion; searching registered users according to a number of the called terminal; and in response to finding the called terminal, establishing a connection between the called terminal and the browser user terminal.

The called terminal may be a user terminal internal to the government or enterprise intranet.

The method may further include: receiving a call request sent by a landline user terminal internal to the government or enterprise intranet requesting to call the called terminal.

In response to receiving the call request sent by the landline user terminal internal to the government or enterprise intranet, protocol conversion may be performed; registered users may be searched according to a number of the called terminal; and in response to finding the called terminal, a connection may be established between the called terminal and the landline user terminal internal to the government or enterprise intranet. The called terminal may be a user terminal internal to the government or enterprise intranet.

The method may further include: receiving a call request sent by a landline user terminal internal to the government or enterprise intranet requesting to call the called terminal.

In response to receiving a call request sent by a browser user terminal or a landline user terminal internal to the government or enterprise intranet, protocol conversion may be performed; registered users may be searched according to a number of the called terminal; in response to finding no called terminal, the call request may be sent to a Voice over Internet Phone (VOIP) through an Ethernet and a router to establish, through the VOIP, a connection between the called terminal and the browser user terminal or the landline user terminal internal to the government or enterprise intranet. The called terminal may be a user terminal external to the government or enterprise intranet.

The method may further include: receiving a call request sent by a landline user terminal internal to the government or enterprise intranet requesting to call the called terminal.

In response to receiving a call request sent by a browser user terminal or a landline user terminal internal to the government or enterprise intranet, when the landline user terminal or the browser user terminal is permitted to call, a connection may be established between the called terminal and the browser user terminal or the landline user terminal according to the call request.

An embodiment herein provides a non-transitory computer-readable storage medium, storing therein computer-executable instructions for executing the method.

Embodiments herein have beneficial effects as follows.

With the device and method for communication via a government or enterprise intranet, and non-transitory computer-readable storage medium according to embodiments herein, different terminals internal and external to the government or enterprise intranet may call one another independent of an operator network, greatly reducing cost.

### BRIEF DESCRIPTION OF THE DRAWINGS

Fig.1 is a diagram of a structure of a device for communication via a government or enterprise intranet according to Embodiment 1 herein.
Fig.2 is a diagram of a structure of another device for communication via a government or enterprise intranet according to Embodiment 1 herein.
Fig.3 is a diagram of a structure of another device for communication via a government or enterprise intranet according to Embodiment 1 herein.
Fig.4 is a diagram of a structure of another device for communication via a government or enterprise intranet according to Embodiment 1 herein.
Fig.5 is a diagram of a structure of another device for communication via a government or enterprise intranet according to Embodiment 1 herein.
Fig.6 is a flowchart of a method for communication via a government or enterprise intranet according to Embodiment 2 herein.
Fig.7 is a flowchart of another method for communication via a government or enterprise intranet according to Embodiment 2 herein.
Fig.8 is a diagram of a structure of a system for implementing a method for communication via a government or enterprise intranet according to Embodiment 2 herein.
Fig.9 is a flowchart of calling one another in another method for communication via a government or enterprise intranet according to Embodiment 2 herein.

### DETAILED DESCRIPTION

Embodiments herein will be elaborated below with reference to drawings. The drawings form part of the present disclosure, and are used in combination with embodiments herein to explain a principle herein. For clarity and simplicity, details of known function and structure in a device described herein may be omitted to prevent the subject matter herein from being obscured.

Embodiments herein provide a device and method for communication via a government or enterprise intranet. With the device, different types of terminals internal and external to the government or enterprise intranet may call one another independent of an operator network, greatly reducing cost. A technical solution herein will be elaborated below with embodiments.

### Embodiment 1

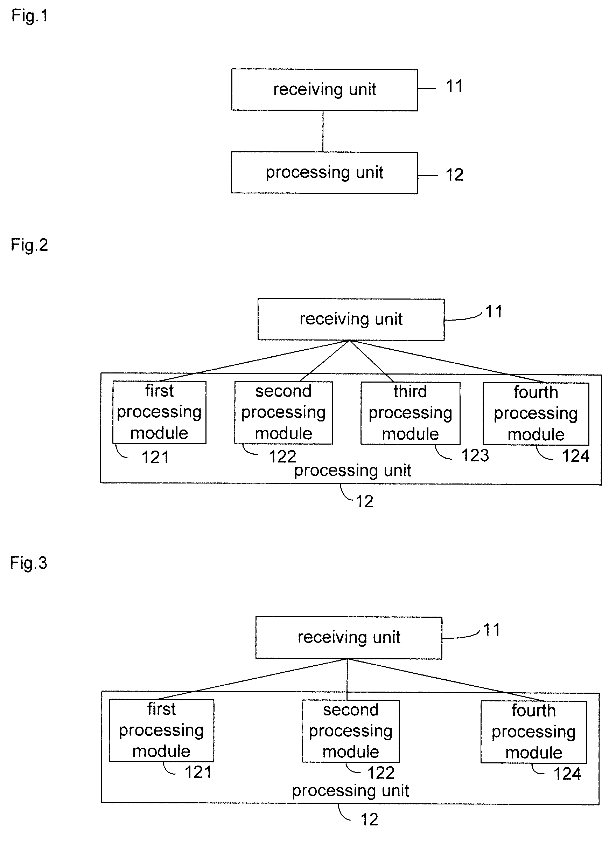

An embodiment herein provides a device for communication via a government or enterprise intranet. Referring to Fig.1, the device includes a receiving unit 11 and a processing unit 12 coupled with each other. According to an embodiment herein, the receiving unit 11 receives a call request sent by a browser user terminal requesting to call a called terminal. The call request may be sent through a browser supporting Web Real-Time Communication (WebRTC). After the call request is received, the processing unit 12 establishes a connection between the called terminal and the calling terminal according to the call request. The processing unit 12 may perform protocol conversion and then search registered users according to a number of the called terminal; in response to finding the called terminal, establish a connection between the called terminal and the calling terminal. The protocol conversion may include converting information on the called terminal and the calling terminal, media information and the like included in the call request into that of a unified internal protocol.

According to an embodiment herein, a calling terminal capable of logging into a browser may send the receiving unit a call request in a HyperText Transfer Protocol (HTTP) or a WebSocket protocol through a browser supporting WebRTC. A registered calling terminal internal to the government or enterprise intranet with no Internet access, such as various landline phones, may directly send a call request to the receiving unit 11. The processing unit 12 may perform protocol conversion on the call request to establish a connection between the called terminal and the calling terminal.

The processing unit 12 according to an embodiment herein may have to convert the received call request into that of a pre-set protocol before establishing the connection between the called terminal and the calling terminal according to the call request. The pre-set protocol may be a protocol universal inside the device for communication via a government or enterprise intranet according to an embodiment herein, such as a Session Initiation Protocol (SIP), Opus, G.711 protocol or another related processing protocol.

For example, the processing unit 12 may convert a call request into that of unified SIP inside the device for communication via a government or enterprise intranet, or may convert a call request into that of Opus and G.711 protocol when the called terminal is of a landline user internal to the government or enterprise intranet.

The calling terminal according to an embodiment herein may include a registered browser user terminal or registered landline user terminal internal to the government or enterprise intranet. A browser user terminal may include a mobile phone, a PC, a tablet, or the like. A browser user internal to the government or enterprise intranet may be in an office of the enterprise or somewhere on a business trip. A landline user terminal may include a common phone booth post, a SIP phone, or a SIP video phone. The calling terminal according to an embodiment herein may include a browser user terminal external to the government or enterprise intranet, such as a mobile phone, a PC, or a tablet.

The called terminal may include a registered browser user terminal or registered landline user terminal internal to the government or enterprise intranet, or a browser user terminal or landline user terminal external to the government or enterprise intranet. The browser user terminal may include a mobile phone, a PC, a tablet, etc. The landline user terminal may include a mobile phone, a common phone booth post, a SIP phone, a SIP video phone, etc.

According to an embodiment herein, upon receiving, by the receiving unit 11, a call request sent by a registered browser user terminal or registered landline user terminal internal to the government or enterprise intranet, it may be determined whether the calling terminal is permitted to call. The processing unit 12 may be triggered to perform connection for a call request by a calling terminal permitted to call.

Fig.2 is a diagram of a structure of another device for communication via a government or enterprise intranet according to Embodiment 1 herein. As shown in Fig.2, the processing unit 12 may further include a first processing module 121, a second processing module 122, a third processing module 123, and a fourth processing module 124. The first processing module 121, the second processing module 122, the third processing module 123, and the fourth processing module 124 may each be coupled respectively with the receiving unit 11.

The first processing module 121 may be configured for: in response to receiving, by the receiving unit 11, a call request sent by a browser user terminal internal to the government or enterprise intranet, performing protocol conversion; searching registered users according to a number of the called terminal; and in response to finding the called terminal, establishing a connection between the called terminal and the browser user terminal internal to the government or enterprise intranet.

The second processing module 122 may be configured for: in response to receiving, by the receiving unit 11, a call request sent by a browser user terminal external to the government or enterprise intranet, performing protocol conversion; searching the registered users according to the number of the called terminal; and in response to finding the called terminal, establishing a connection between the called terminal and the browser user terminal external to the government or enterprise intranet. For example, when the browser user terminal external to the government or enterprise intranet calls a customer service hotline of the enterprise, the second processing module 122 may connect the browser user terminal external to the government or enterprise intranet to the customer service hotline of the enterprise after performing protocol conversion.

The third processing module 123 may be configured for: in response to receiving, by the receiving unit 11, the call request sent by the landline user terminal internal to the government or enterprise intranet, performing protocol conversion; searching registered users according to a number of the called terminal; and in response to finding the called terminal, establishing a connection between the called terminal and the landline user terminal internal to the government or enterprise intranet.

The called terminal involved in the first processing module 121, the second processing module 122, and the third processing module 123 may be a user terminal internal to the government or enterprise intranet.

The fourth processing module 124 may be configured for: in response to receiving, by the receiving unit 11, a call request sent by a browser user terminal or a landline user terminal internal to the government or enterprise intranet, performing protocol conversion; searching registered users according to a number of the called terminal; in response to finding no called terminal, sending the call request to a VOIP through an Ethernet and a router to establish, through the VOIP, a connection between the called terminal and the browser user terminal or the landline user terminal internal to the government or enterprise intranet. The called terminal may be a user terminal external to the government or enterprise intranet. The called user may be external to the government or enterprise intranet. That is, the called user may not be registered to the government or enterprise intranet.

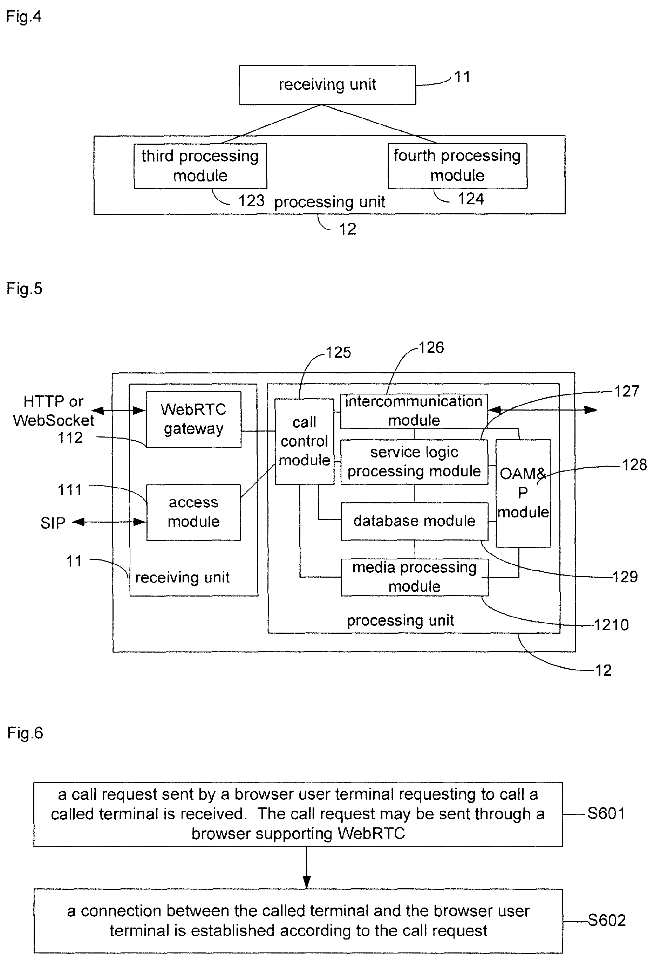

Those skilled in the art may use only some of the processing modules as needed. For example, only the first processing module 121, the second processing module 122, and the third processing module 123 may be set, or only the devices shown in Fig.3 and Fig.4 may be set.

Fig.3 is a diagram of a structure of another device for communication via a government or enterprise intranet according to Embodiment 1 herein. As shown in Fig.3, the processing unit 12 may further include a first processing module 121, a second processing module 122, and a fourth processing module 124. In addition, the first processing module 121, the second processing module 122, and the fourth processing module 124 may each be coupled respectively with the receiving unit 11. The first processing module 121 may be configured for: in response to receiving, by the receiving unit 11, a call request sent by a browser user terminal internal to the government or enterprise intranet, performing protocol conversion; searching registered users according to a number of the called terminal; and in response to finding the called terminal, establishing a connection between the called terminal and the browser user terminal internal to the government or enterprise intranet. The second processing module 122 may be configured for: in response to receiving, by the receiving unit 11, a call request sent by a browser user terminal external to the government or enterprise intranet, performing protocol conversion; searching the registered users according to the number of the called terminal; and in response to finding the called terminal, establishing a connection between the called terminal and the browser user terminal external to the government or enterprise intranet. For example, when the browser user terminal external to the government or enterprise intranet calls a customer service hotline of the enterprise, the second processing module 122 may connect the browser user terminal external to the government or enterprise intranet to the customer service hotline of the enterprise after performing protocol conversion. The called terminal involved in the first processing module 121 and the second processing module 122 may be a user terminal internal to the government or enterprise intranet. The fourth processing module 124 may be configured for: in response to receiving, by the receiving unit 11, a call request sent by a browser user terminal or a landline user terminal internal to the government or enterprise intranet, performing protocol conversion; searching registered users according to a number of the called terminal; in response to finding no called terminal, sending the call request to a VOIP through an Ethernet and a router to establish, through the VOIP, a connection between the called terminal and the browser user terminal or the landline user terminal internal to the government or enterprise intranet. The called terminal involved in the fourth processing module 124 may be a user terminal external to the government or enterprise intranet.

Fig.4 is a diagram of a structure of another device for communication via a government or enterprise intranet according to Embodiment 1 herein. Compared to Fig.2 and Fig.3, the processing unit 12 here may include only a third processing module 123 and a fourth processing module 124. The third processing module 123 and the fourth processing module 124 may be coupled with the receiving unit 11. The receiving unit 11 may receive a call request sent by a landline user terminal internal to the government or enterprise intranet requesting to call the called terminal. The fourth processing module 124 may be configured for: performing protocol conversion; searching registered users according to a number of the called terminal; in response to finding no called terminal, sending the call request to a VOIP through an Ethernet and a router to establish, through the VOIP, a connection between the called terminal and the browser user terminal or the landline user terminal internal to the government or enterprise intranet. The called terminal involved in the fourth processing module 124 may be a user terminal external to the government or enterprise intranet. The third processing module 123 may be configured for: in response to receiving, by the receiving unit, the call request sent by the landline user terminal internal to the government or enterprise intranet, performing protocol conversion; searching registered users according to a number of the called terminal; and in response to finding the called terminal, establishing a connection between the called terminal and the landline user terminal internal to the government or enterprise intranet. The called terminal may be a user terminal internal to the government or enterprise intranet.

An embodiment herein may further provide architecture of a device for communication via a government or enterprise intranet, which, referring to Fig.5, may include: a WebRTC gateway 112, an access module 111, a call control module 125, a media processing module 1210, an intercommunication module 126, a service logic processing module 127, a database module 129, and an Operation, Administration, Maintenance and Provisioning OAM&P module 128. The WebRTC gateway 112 and the access module 111 may form the receiving unit 11, and the other modules may form the processing unit 12 herein.

The WebRTC gateway 112 may receive a call request sent by HTTP or WebSocket, perform internal signalling conversion on the call request, usually by converting HTTP or SIP over WebSocket to SIP, and send the call request to the call control module 125.

The access module 111 may mainly serve to receive a call request sent by an common phone booth post, a SIP phone, or a SIP video phone, and send the call request to the call control module 125.

The call control module 125 may mainly serve to perform authentication and calling processing on a call of a user, and communicate with the other modules, including functions such as point-to-point voice and video call, routing, call information search, media plane/Internet Communications Engine ICE negotiation, service trigger, etc.

The media processing module 1210 may mainly serve for media functions such as media transcoding, protocol conversion, etc.

The intercommunication module 126 may be configured mainly for intercommunication with another IP network.

The service logic processing module 127 may include services such as a call centre service, a supplementary service, Unified Communication UC, etc. The call centre may implement call queuing and scheduling. The supplementary service may mainly include supplementary services such as call forwarding. The UC may include a service such as message and file sharing.

The database module 129 may mainly serve to store service data and authentication data related to a user of the government or enterprise intranet.

The OAM&P module 128 may mainly serve for daily network management such as handling a failure, performance, etc., of a communication platform.

When a called terminal external to the government or enterprise intranet is to be called according to a call request, the processing unit 12 may send the call request to a network element VOIP through an Ethernet and a router. That is, the processing unit according to an embodiment herein may be connected to a Public Switched Telephone Network (PSTN) through a trunk (FXO or E1), and may send the PSTN a locally received call request involving a called terminal external to the government or enterprise intranet for call connection. Before starting the call, relevant protocol conversion may be performed, such as by converting the call request to that of a SIP applicable to the PSTN.

A terminal internal to the government or enterprise intranet according to an embodiment herein may have to be registered. User registration may be performed using the HTTP (username, password) or the WebSocket protocol. User registration may be performed using a username and a password, an Open Identity (ID), or by SIP Digest, or in the communication platform of the government or enterprise intranet. For a call centre service, user registration may not be performed.

An embodiment herein will be elaborated below with reference to an example.

The receiving unit 11 may receive a call request sent by a calling terminal requesting to call a called terminal. The call request may be sent via HTTP or WebSocket. When a call request of a calling terminal registered to the government or enterprise intranet is received, it may be determined, such as by the receiving unit, whether the calling terminal is permitted to call. When it is determined that the calling terminal has a call permission, the processing unit 12 may convert the received call request into that of a pre-set protocol, and then establish a connection between the called terminal and the calling terminal. When a called terminal external to the government or enterprise intranet is to be called according to the call request, the processing unit 12 may send the call request to the VOIP through the Ethernet and the router.

With the WebRTC-based device for communication via a government or enterprise intranet according to an embodiment herein, different types of terminals internal and external to the government or enterprise intranet may be allowed to call one another independent of an operator network, saving a roaming expense, thereby reducing cost.

### Embodiment 2

An embodiment herein provides a method for communication via a government or enterprise intranet. Referring to Fig.6, the method includes steps as follows.

In step S601: a call request sent by a browser user terminal requesting to call a called terminal is received. The call request may be sent through a browser supporting WebRTC.

In step S602, a connection between the called terminal and the browser user terminal is established according to the call request.

The step may include converting the call request into that of a pre-set protocol, and then establishing the connection between the called terminal and the calling terminal. The pre-set protocol may be a protocol universal inside the device for communication via a government or enterprise intranet according to an embodiment herein, such as a SIP, Opus, or G.711 protocol.

For example, any call request of HTTP or Websocket may be converted into that of unified SIP; or a call request may be converted into that of Opus and G.711 protocol when the called terminal is of a landline user internal to the government or enterprise intranet.

The calling terminal according to an embodiment herein may include a registered browser user terminal or registered landline user terminal internal to the government or enterprise intranet. A browser user terminal may include a mobile phone, a PC, a tablet, or the like. A landline user terminal may include a common phone booth post, a SIP phone, or a SIP video phone. The calling terminal according to an embodiment herein may include a browser user terminal external to the government or enterprise intranet, such as a mobile phone, a PC, or a tablet.

The called terminal according to an embodiment herein may include a registered browser user terminal or registered landline user terminal internal to the government or enterprise intranet, or a browser user terminal or landline user terminal external to the government or enterprise intranet. The browser user terminal may include a mobile phone, a PC, a tablet, etc. The landline user terminal may include a common phone booth post, a SIP phone, a SIP video phone, etc.

Once a call request sent by a calling terminal registered to the government or enterprise intranet is received, it may be determined whether the calling terminal is permitted to call. When the calling terminal is permitted to call, media negotiation may be performed on the call request, and the connection between the called terminal and the calling terminal may be established according to the call request.

When a called terminal external to the government or enterprise intranet is to be called according to a call request, the call request may be sent to a VOIP through an Ethernet and a router. That is, the processing unit according to an embodiment herein may be connected to a Public Switched Telephone Network (PSTN) through a trunk (FXO or E1), and may send the PSTN a locally received call request involving a called terminal external to the government or enterprise intranet for call connection. Before starting the call, protocol conversion may be performed, such as by converting the call request to that of a SIP applicable to the PSTN.

The method according to an embodiment herein may further include a registration step. User registration may be performed using the HTTP (username, password) or the WebSocket protocol. User registration may be performed using a username and a password, an Open ID, or by SIP Digest, or in the communication platform of the government or enterprise intranet. For a call centre service, user registration may be omitted.

An embodiment herein will be described below with some examples in detail.

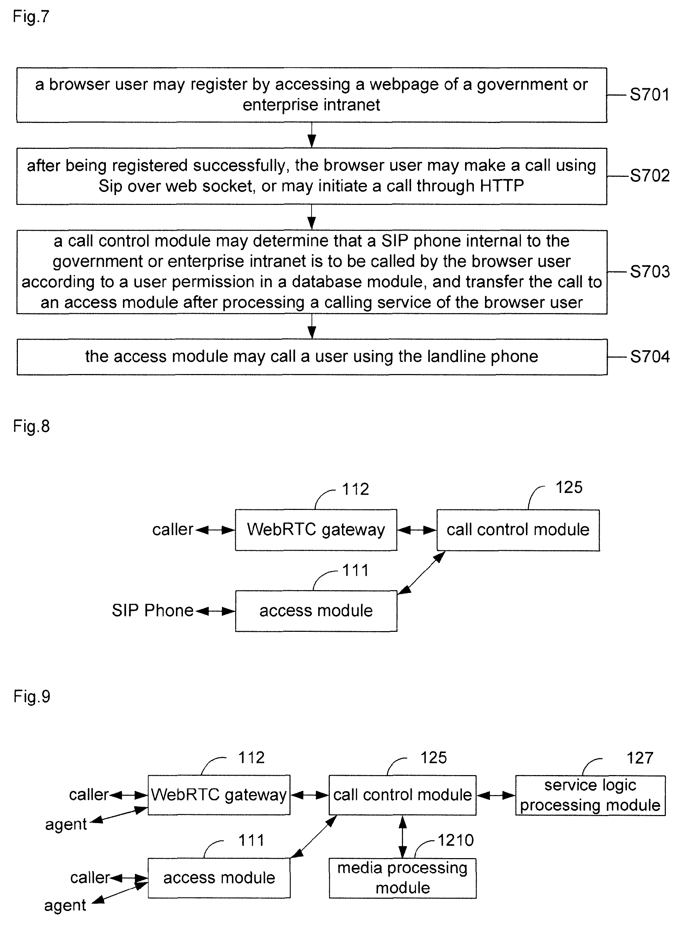

Fig.7 is a flowchart of another method for communication via a government or enterprise intranet according to Embodiment 2 herein. Fig.8 is a diagram of a structure of a system for implementing a method for communication via a government or enterprise intranet according to Embodiment 2 herein. Referring to Fig.5, Fig.7, and Fig.8, the method may include steps as follows.

In step S701, a browser user may register by accessing a webpage of a government or enterprise intranet.

The browser user may access the webpage of the government or enterprise intranet through a PC, a mobile phone, or a tablet. The webpage may include a link for registration, through which the browser user may be registered.

In step S702, after being registered successfully, the browser user may make a call using Sip over web socket, or may initiate a call through HTTP. After receiving WebSocket signalling, a WebRTC gateway may convert information on the called terminal and the calling terminal, media information, etc. transferred by web socket or HTTP into that of an internal protocol, and send the converted information to a call control module.

after being registered successfully, the browser user may request a service such as an audio, video, UC service with a colleague as needed, by clicking on a call button in an address book. The clicking may trigger calling, by a WebRTC Application Programming Interface API, audio and video resources to implement the call service. The browser may transfer information such as a called number, an employee number (required to correspond to the called number) to the WebRTC gateway through WebSocket or HTTP. The information on the called terminal and the calling terminal, media information, etc. transferred in the web socket or HTTP may be converted into the internal protocol, and sent to the call control module to implement a supplementary service, a message service, or the like. When the browser user calls a landline user of the government or enterprise intranet, audio codec conversion such as conversion related to Opus and G.711 may be required, which may be implemented by a media processing module.

In step S703, a call control module may determine that a SIP phone internal to the government or enterprise intranet is to be called by the browser user according to a user permission in a database module, and transfer the call to an access module after processing a calling service of the browser user.

In step S704, the access module may call the SIP phone. The landline user may answer the call, such that the two parties start to talk with each other.

For example, Fig.9 is a flowchart of calling one another in a method for communication via a government or enterprise intranet according to an embodiment herein. As shown in Fig.9, when a landline client (such as a SIP phone) of a government or enterprise intranet dials a number of a browser user, information on the called terminal and media plane information may be transferred to an access module of a device for communication via a government or enterprise intranet. The access module may transfer the call information to a call control module. Based on a service signed up for by the calling user, the call control module may first process a calling service (such as a supplementary service) of the SIP phone. Then, when it is determined, according to the called number, that the called user has been registered in the call control module, a WebRTC module may locate the WebRTC user using Sip over web socket. The WebRTC user will be ringed to answer the call.

When a calling terminal external to the government or enterprise intranet, capable of logging into a browser, is to call an agent machine of the enterprise intranet (that is, the calling terminal dials a customer service hotline number of the government or enterprise intranet), protocol conversion may be performed on the call request. After queuing and scheduling (as needed), a connection between the calling terminal and the agent machine of the enterprise intranet may be established.

A client external to the government or enterprise intranet may call an agent machine of the government or enterprise intranet directly by browsing a webpage and clicking on a webpage link, skipping an operator network. When the client clicks on a call button, the call may be transferred, through Sip over WebSocket or HTTP, to the WebRTC gateway of the device for communication via a government or enterprise intranet, where the call is to be processed. The WebRTC gateway may record, for addressing purpose, information on an address of the client. The call control module in the device for communication via a government or enterprise intranet may determine, according to information on the called terminal, that the called number is a number of a call centre. A service logic processing module may be triggered. The service logic processing module may queue the call, and perform playback to the waiting user via the media processing module. The service logic processing module may schedule the call, and distribute, according to a state of an agent machine, the call to the agent machine, where the call is to be processed.

When a called terminal external to the government or enterprise intranet is to be called according to a call request, the call request may be sent, through the Ethernet and the router, to the VOIP for connection. A local call may be sent to a PSTN through a connection with the PSTN via a trunk (FXO or E1). An IP long-distance call may be sent to a VOIP network through a connection with the internal Ethernet and router. Conversion from WebSocket-SIP, WebSocket-PTSN, and HTTP to PSTN may be required, depending on a calling user.

In case that a called terminal internal to the government or enterprise intranet has signed up for a forwarding service, such as when the user is on a business trip, all calls may be routed to a number of a forwarding terminal of the called terminal. For example, when a staff member internal to the government or enterprise intranet goes on a business trip, a call to his/her landline phone may be forwarded to his/her mobile phone, thereby effectively ensuring smooth communication.

An embodiment herein further provides a non-transitory computer-readable storage medium, storing therein computer-executable instructions for executing the method according to an aforementioned embodiment.

An aforementioned module may be implemented by a Central Processing Unit (CPU), a Digital Signal Processor (DSP), or a Field-Programmable Gate Array (FPGA) in electronic equipment.

Those skilled in the art will know that an embodiment herein may provide a method, system, or computer program product. Therefore, an embodiment herein may take on a form of hardware, software, or a combination thereof. In addition, an embodiment herein may take on a form of a computer program product implemented on one or more computer available storage media (including but not limited to, magnetic disk memory, optic memory, and the like) containing computer available program codes.

The disclosure is illustrated with reference to flowcharts and/or block diagrams of the method, device (system) and computer-program product according to embodiments described herein. Note that each flow in the flowcharts and/or each block in the block diagrams as well as combination of flows in the flowcharts and/or blocks in the block diagrams may be implemented by instructions of a computer program. Such instructions may be offered in a processor of a general-purpose computer, a dedicated computer, an embedded processor or other programmable data processing devices to generate a machine, such that a device with a function specified in one or more flows of the flowcharts and/or one or more blocks in the block diagrams is produced by instructions executed by a processor of a computer or other programmable data processing devices.

These computer-program instructions may also be stored in a non-transitory computer-readable memory capable of guiding a computer or another programmable data processing device to work in a given way, such that the instructions stored in the computer-readable memory generate a manufactured good including an instruction device for implementing a function specified in one or more flows of the flowcharts and/or one or more blocks in the block diagrams.

These computer-program instructions may also be loaded in a computer or other programmable data processing devices, which thus executes a series of operations thereon to generate computer-implemented processing, such that the instructions executed on the computer or other programmable data processing devices provide the steps for implementing the function specified in one or more flows of the flowcharts or one or more blocks in the block diagrams.

Embodiments herein provide a device and method for communication via a government or enterprise intranet, and a non-transitory computer-readable storage medium. With the embodiments herein, different terminals internal and external to the government or enterprise intranet may call one another independent of an operator network, greatly reducing cost.

What described are merely embodiment of the present disclosure and are not intended to limit the scope of protection of the present disclosure. Any variations or replacements apparent to those skilled in the art within the technical scope disclosed herein shall fall within the scope of protection of the present disclosure. The scope of protection of the present disclosure shall be subject to the scope of protection of the claims.

## Claims

1. A device for communication via a government or enterprise intranet, comprising:
a receiving unit configured for: receiving a call request sent by a browser user terminal requesting to call a called terminal, the call request being sent through a browser supporting Web Real-Time Communication (WebRTC); and
a processing unit configured for: establishing a connection between the called terminal and the browser user terminal according to the call request.

2. The device according to claim 1, wherein the processing unit comprises a first processing module and /or a second processing module;
the first processing module is configured for: in response to receiving, by the receiving unit, a call request sent by a browser user terminal internal to the government or enterprise intranet, performing protocol conversion; searching registered users according to a number of the called terminal; and in response to finding the called terminal, establishing a connection between the called terminal and the browser user terminal internal to the government or enterprise intranet;
the second processing module is configured for: in response to receiving, by the receiving unit, a call request sent by a browser user terminal external to the government or enterprise intranet, performing protocol conversion; searching the registered users according to the number of the called terminal; and in response to finding the called terminal, establishing a connection between the called terminal and the browser user terminal external to the government or enterprise intranet,
the called terminal being a user terminal internal to the government or enterprise intranet.

3. The device according to claim 1, wherein the processing unit comprises a third processing module;
the receiving unit is further configured for: receiving a call request sent by a landline user terminal internal to the government or enterprise intranet requesting to call the called terminal;
the third processing module is configured for: in response to receiving, by the receiving unit, the call request sent by the landline user terminal internal to the government or enterprise intranet, performing protocol conversion; searching registered users according to a number of the called terminal; and in response to finding the called terminal, establishing a connection between the called terminal and the landline user terminal internal to the government or enterprise intranet, the called terminal being a user terminal internal to the government or enterprise intranet.

4. The device according to any one of claims 1 to 3, wherein the processing unit comprises a fourth processing module;
the receiving unit is further configured for: receiving a call request sent by a landline user terminal internal to the government or enterprise intranet requesting to call the called terminal;
the fourth processing module is configured for: in response to receiving, by the receiving unit, a call request sent by a browser user terminal or a landline user terminal internal to the government or enterprise intranet, performing protocol conversion; searching registered users according to a number of the called terminal; in response to finding no called terminal, sending the call request to a Voice over Internet Phone (VOIP) through an Ethernet and a router to establish, through the VOIP, a connection between the called terminal and the browser user terminal or the landline user terminal internal to the government or enterprise intranet, the called terminal being a user terminal external to the government or enterprise intranet.

5. The device according to any one of claims 1 to 3, wherein
the receiving unit is further configured for: in response to receiving a call request sent by a browser user terminal or a landline user terminal internal to the government or enterprise intranet, triggering the processing unit when the landline user terminal or the browser user terminal is permitted to call.

6. A method for communication via a government or enterprise intranet, comprising:
receiving a call request sent by a browser user terminal requesting to call a called terminal, the call request being sent through a browser supporting Web Real-Time Communication (WebRTC); and establishing a connection between the called terminal and the browser user terminal according to the call request.

7. The method according to claim 6, wherein the establishing a connection between the called terminal and the browser user terminal according to the call request comprises:
in response to receiving a call request sent by a browser user terminal internal or external to the government or enterprise intranet, performing protocol conversion; searching registered users according to a number of the called terminal; and in response to finding the called terminal, establishing a connection between the called terminal and the browser user terminal,
the called terminal being a user terminal internal to the government or enterprise intranet.

8. The method according to claim 6, further comprising: receiving a call request sent by a landline user terminal internal to the government or enterprise intranet requesting to call the called terminal,
wherein in response to receiving the call request sent by the landline user terminal internal to the government or enterprise intranet, protocol conversion is performed; registered users are searched according to a number of the called terminal; and in response to finding the called terminal, a connection is established between the called terminal and the landline user terminal internal to the government or enterprise intranet, the called terminal being a user terminal internal to the government or enterprise intranet.

9. The method according to any one of claims 6 to 8, further comprising:
receiving a call request sent by a landline user terminal internal to the government or enterprise intranet requesting to call the called terminal,
wherein in response to receiving a call request sent by a browser user terminal or a landline user terminal internal to the government or enterprise intranet, protocol conversion is performed; registered users are searched according to a number of the called terminal; in response to finding no called terminal, the call request is sent to a Voice over Internet Phone (VOIP) through an Ethernet and a router to establish, through the VOIP, a connection between the called terminal and the browser user terminal or the landline user terminal internal to the government or enterprise intranet, the called terminal being a user terminal external to the government or enterprise intranet.

10. The method according to any one of claims 6 to 8, further comprising:
receiving a call request sent by a landline user terminal internal to the government or enterprise intranet requesting to call the called terminal,
wherein in response to receiving a call request sent by a browser user terminal or a landline user terminal internal to the government or enterprise intranet, when the landline user terminal or the browser user terminal is permitted to call, a connection is established between the called terminal and the browser user terminal or the landline user terminal according to the call request.

11. A non-transitory computer-readable storage medium, storing therein computer-executable instructions for executing the method according to any one of claims 6 to 10.
